Europäisches Patentamt

European Patent Office

Office européen des brevets

(19)

(11) Publication number: **0 091 143**
**A2**

(12) # EUROPEAN PATENT APPLICATION

(21) Application number: **83200361.0**

(22) Date of filing: **16.03.83**

(51) Int. Cl.³: **H 04 Q 9/00**

(30) Priority: **07.04.82 GB 8210325**

(43) Date of publication of application:
**12.10.83 Bulletin 83/41**

(84) Designated Contracting States:
**DE FR NL SE**

(71) Applicant: **MOTOROLA ISRAEL LIMITED**
**16 Kremenetski Street**
**Tel Aviv 67899(IL)**

(72) Inventor: **Gran, Paul**
**9/14 Fireberg Street**
**Kfar Saba(IL)**

(72) Inventor: **Feiner, Haim**
**81 Brenner Street**
**Herzilia(IL)**

(72) Inventor: **Ben-Dayan, Nissim**
**60 Levi Eshkol Street**
**Tel Aviv(IL)**

(72) Inventor: **Stefaniu, Marian**
**200 Gateway Boulevard Apartment 1514**
**Don Mills Ontario(CA)**

(72) Inventor: **Mar-Chaim, Yechiam**
**25 Ophir Street**
**Tel Aviv(IL)**

(74) Representative: **Ibbotson, Harold**
**Motorola Limited Armstrong Road Daneshill East**
**Basingstoke Hants RG24 9NN(GB)**

(54) **Signal processing unit.**

(57) This invention relates to a signal processing unit.
The processing unit in a preferred form is a status monitoring and remote control unit which includes a microprocessor having configured therewithin one or more counters which may be controlled in response to a message transmitted to the signal processing unit from a central station.

The count in a counter may be frozen in response to a received message so that a number of counters located within a number of processing units may be monitored simultaneously from a central station.

The invention is particularly applicable to a status-and-control unit forming one of a number of such units which communicate by means of a transeiver with a central station.

*Fig. 4*

Croydon Printing Company Ltd.

## SIGNAL PROCESSING UNIT

### TECHNICAL FIELD

This invention relates to a signal processing unit and particularly but not exclusively to a unit suitable for forming part of a supervisory control system in which a plurality of such units perform monitoring and control functions under the supervision of a central station which communicates with the units via a communications link which may be a radio or wire line link.

### BACKGROUND ART

A known signal processing unit of the above type may be a status unit, a control unit or a combined status-and-control unit.

A status unit monitors the state of one or more input signals and when a change of state occurs at a status input a message to that effect is generated and sent to the central station, the message containing an address which identifies the transmitting unit. A control unit provides one or more control outputs at which signals are provided for remote control functions. Activation of a control output may result in the closure of a relay contact and this activation is initiated by means of a message sent from the central station to the control unit.

A status-and-control unit combines the functions of the other two types of unit.

This invention seeks to provide an improved signal processing unit compared with known such units.

In an embodiment of the present invention there is provided a signal processing unit comprising communication transceiving means for transmitting messages from and receiving messages transmitted to the processing unit, and processing means including counting means for counting predetermined events, the counting means being controllable in response to a received message.

Means may be provided for controlling the counting means by freezing the count of the counting means in response to a received message.

The counting means may include a first counter for counting the predetermined events and a storage register arranged to count in parallel with the first counter, the count being frozen by disabling counting of the storage register.

The processing means may be operative to initiate a message transmission reporting the frozen count in response to a received message.

The counting of the storage register may be disabled by gating means through which the storage register is fed.

The counting means may include a plurality of first counters each having a respective storage register arranged to count in parallel therewith.

The counting means may include means for setting at least one counting limit, means being provided for indicating when the count of the counting means falls outside the set limit.

Comparator means may be provided for comparing the count of the counting means with a preset limit and for providing the said indication.

The counting means may be controllable to change a limit in response to a received message.

The signal processing unit may include status sensing means for sensing the status of one or more status inputs the predetermined events being changes of state sensed by the status sensing means.

The processing unit may include one or more control outputs for providing remote control function.

The processing means may be a suitably programmed microprocessor.

The counting means may be configured within the microprocessor by the programme.

## DETAILED DESCRIPTION

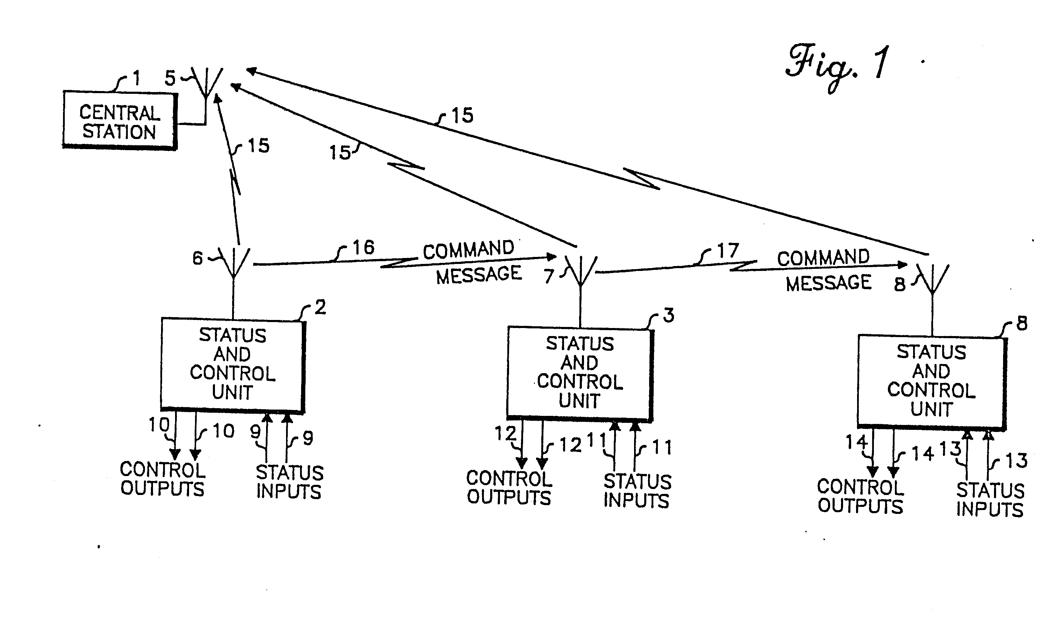

An exemplary embodiment of the invention will now be described with reference to the drawings in which Fig. 1 illustrates schematically a supervisory control system including processing units in accordance with the present invention.

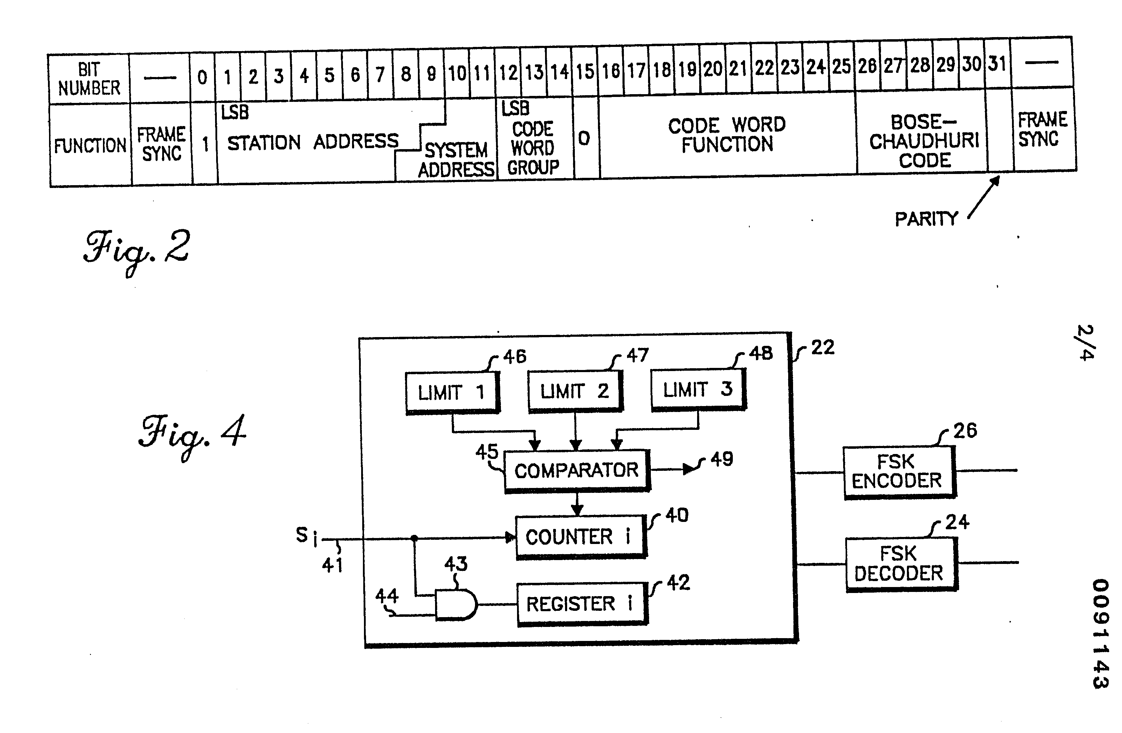

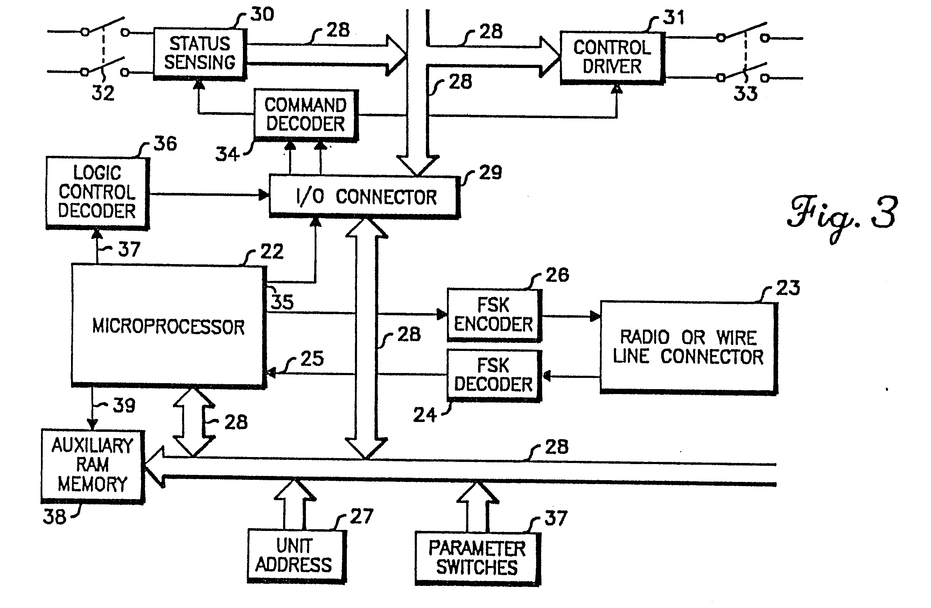

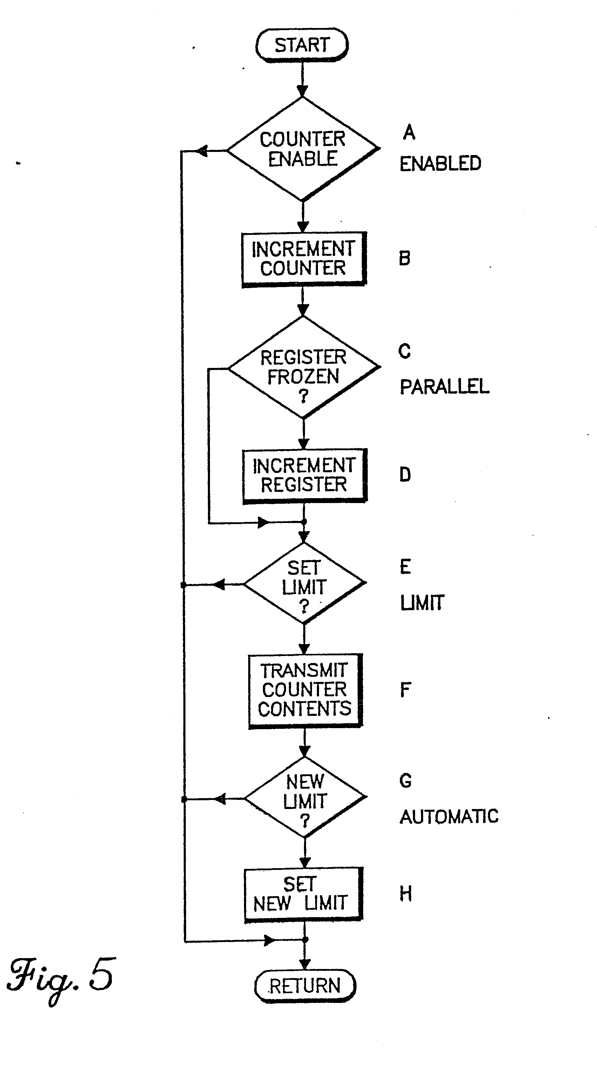

Fig. 2 illustrates the form of code word utilized for communication in the system of Fig. 1; Fig. 3 illustrates a signal processing unit of this invention in more detail, Fig. 4 illstrates a preferred embodiment of the counting means, and Fig. 5 is an explanatory flow chart diagram.

Referring now to Fig. 1 the supervisory control system illustrated comprises a central station 1 which supervises the activities of remotely located status-and-control units 2, 3 and 4. The central station communicates with the units 2, 3 and 4 by means of radio transmission from an aerial 5 which transmissions are received by the respective aerials 6, 7 and 8 of the units 2, 3 and 4.

The status and control unit 2 has a number of status inputs 9 of which two are shown and a number of control outputs 10 of which two are illustrated. Likewise the unit 3 has status inputs 11 and control outputs 12 and the unit 4 status inputs 13 and control outputs 14.

The status inputs 9 of the unit 2 provide monitoring functions such as the monitoring of the water level at a reservoir and any change results in a change at the status inputs. This change may typically be a switch closure due to the water level change and may be communicated to the central station 1 by means of a transmission 15 in digitally coded form. The central station may then send a transmission to the status and control unit 2 in the reverse direction which contains a coded message instructing this unit to provide a control output at one of its control outputs 10 to operate for example a pump.

In addition the status and control unit 2 may be configured so that a change in status at any one of its status inputs 9 results in a command message 16 to the status and control unit 3 to provide an output signal at one of its control outputs. Similarly unit 3 may correspond with the unit 4 via a transmission 17.

A typical code word used for the digitally coded transmission is illustrated in Fig. 2 to which reference will now be made.

In Fig. 2 the illustrated code word contains 32 bits of information these bits being numbered from 0-31. Bit 0 in the present control system is always logical 1. Bits 1-11 define an address portion of the code word and identify a station for which a message is intended and a station from which a message originates. Bits 1-9 define the actual station address while bits 10 and 11 may be used to define a system address where more than one system of signal processing units is controlled by a single central station. Bits 12-25 effectively define the information content in the message, bits 12-14 signifying one group of a number of code word groups whilst bits 16-25 further define the function of the actual code word within the selection group. Bit 15 is always zero. Bits 26-30 constitute a Bose-Chaudhuri Cyclic code which is a function of all the preceeding bits and the final bit number 31 is a parity check bit for the entire code word.

Referring now to Fig. 3 there is shown a more detailed schematic illustration of a signal processing unit in accordance with the invention. The unit includes a microprocessor 22, typically a Mostek 3870. The processing unit has a transceiver (not shown) which may be a radio or wire line unit and signals to and from this transceiver are coupled by means of a connector 23. Received signals are decoded by a F.S.K. decoder 24 and fed to an input 25 of the microprocessor 22. Similarly, signals intended for transmission from the unit are fed from the microprocessor 22 to the connector 23 via an F.S.K. encoder 26. The unit has a unique address which is set in an address store unit 27 and which is read by the microprocessor from a data bus 28 to which the store 27 and the microprocessor 22 are coupled. The data bus 28 is also coupled via an input/output connector 29 to a status sensing unit 30 and a control output driver 31. The status sensing unit 30 formed typically by a number of gates senses the status of a number of status inputs 32 whilst the control driver 31 provides control outputs to activate relays 33.

Status information sensed by the status sensing unit 30 is put onto the data bus 28 under the control of a command decoder 34 typically formed by a Motorola MC 14556, which decodes commands fed from an output 35 of the microprocessor 22 via the input/output connector 29 and these commands are decoded under the control of a logic control decoder 36 which also receives signals from an output 37 of the microprocessor and which is also connected to the command decoder 34 via the input/output connector 29. The command decoder 34 is also coupled to the control driver 31 and therefore ensures that either status information or control signals for the control relays 33 is fed to the data bus 28.

Also coupled to the data bus 28 is a digital parameter store in the form of a number of DIP switches 37 and these switches are used to define a number of parameters which determine how the signal processing unit operates. The parameters are transferred via the data bus 28 under the control of the microprocessor 22 into an auxilliary RAM memory 38 which is accessed by the microprocessor via a connecting line 39.

The parameters can determine various operating modes. For example, one parameter may determine whether the relays 33 are latching or momentary in operation. Another parameter may determine the length of a transmission burst for the signal processing unit. The above are only typical examples of the controls which may be exercised by setting digital values by means of the parameter switches 37.

Assume that a coded messages is sent to the illustrated signal processing unit to activate one of the relays 33. After decoding in the F.S.K. decoder 24 the message appears as a series of marks and spaces at the input 25 of the microprocessor 22. The microprocessor 22 reads the unit address from the address store 27 via the data bus 28 and if this address matches the address in the decoded message the microprocessor will act on the information contained in the message. A command will be transferred to the command decoder 34 from the output 35 of the microprocessor via input/output connector 29, and this command will be decoded by the command decoder 34 under the control of the logical control decoder 36 and will result in the connection of the control driver 31 to the data bus 28 and the subsequent operation of one of the relays 33.

Referring now to Fig. 4 there is shown a preferred embodiment of the invention in which the counting means is configured as part of the microprocessor 22 by means of a computer programme. Within the microprocessor 22 is configured by the computer programme a counter 40 which counts events which in the present example are changes of status monitored at at status input 41.

Each time a change of status occurs at the status input 41 the counter 40 will advance by one count. A register 42 counts in parallel with the counter 40 and is fed from the status input 41 via an AND gate 43 which is enabled by an enable input 44. As the counter 40 counts events fed to it so the register 42 counts in parallel with that counter.

At any stage the count in the register 42 can be frozen by means of a message transmitted from the central station and subsequently decoded by the F.S.K. decoder 24. This message is fed to the microprocessor 22 which removes the enable signal from the enable input 44 of the AND gate 43 thereby freezing the count current in the register 42, in that register 42.

This message can be sent out simultaneously to a number of signal processing units so that the count current in each unit can be frozen at the same moment in time. The count frozen in each signal processing unit can then be read separately for each unit by means of a message sent to a unit. The microprocessor 22 on receiving the message decoded by the F.S.K. decoder 24 generates a message indicating the count frozen in the register 42 and feeds this message to the F.S.K. encoder 26 for encoding and subsequent transmission to the central station.

At the time of freezing and subsequent reading the counter 40 continues to be clocked by events fed from the status input 41 and therefore continuity of the counting means is maintained during all operations.

The count in the counter 40 is compared in comparator 45 with a number of limits of which three 46, 47 and 48 are illustrated. The limit 46 may for example be a low limit, the limit 47 a high limit and the limit 48 a count increment limit in which an increment may be added to a previous limit thereby creating a new limit which allows reporting of each increment. These limits are continuously compared by the comparator 45 with the count of the counter 40 and when a limit is exceeded the comparator 45 provides an output signal at an output 49 which output may be used to generate a message to a central station indicating that a limit has been passed. Each of the limits 46, 47 and 48 may be changed by means of a suitable message transmitted from a central station and fed to the microprocessor 22 after decoding by the F.S.K. decoder 24.

Referring now to Figure 5 together with Figure 4, there is shown a flow chart illustrating the programming of the microprocessor 22 to perform the present invention. The steps of the programme illustrated in the flow chart are as follows:-

Step A - Determine if the counter 40 is enabled (a simple switch, not shown may be used to enable and disable the counter), and whether the counter has experienced a transition i.e. a count.

Step B - Increment the counter.

Step C - Determine whether the register 42 is connect in parallel with the counter 40 of frozen. If the register is frozen move to step E, otherwise execute step D.

Step D - Increment register 42.

Step E - Determine if the count of the counter has reached a preset limit. If the limit has been reached execute step F.

Step F - Send contents of the counter to the central station.

Step G - Is a new limit to be set. If yes execute step H.

Step H - Set new limit by adding a present incremental amount to the old limit. (Preset amount sent from central station).

Although only a single counter and parallel register have been illustrated the microprocessor 22 may be configured by its programming to include more than one counter and register each one responding to a separate event. The routine of Figure 5 would then be called for each counter. The count of a counter may be transmitted to a central station only on response of a message received from that station or transmission may be initiated by a change of state at a status input.

The invention enables the value of a large set of counters forming part of a number of remote signal processing units to be read effectively simultaneously by a central station, the contents of the entire set being frozen in the storage registers associated with the counters. Because the counters are undisturbed during reading and because of the existence of the registers continuity of counting is maintained during all operations.

The invention has been described by way of example and modification may be made without departing from the scope of the invention. For example, although the counting means has been illustrated as being configured within the microprocessor 22 this is not essential and the counting means may be configured using hardware counters.

## CLAIMS

1. A signal processing unit comprising communication transceiving means for transmitting messages from and receiving messages transmitted to the processing unit and processing means including counting means for counting predetermined events, the counting means being controllable in response to a received message.

2. A signal processing unit as claimed in claim 1 wherein means is provided for freezing the count of the counting means in response to a received message.

3. A signal processing unit as claimed in claim 2 wherein the counting means includes a first counter for counting the predetermined events and a storage register arranged to count in parallel with the first counter, the count being frozen by disabling counting of the storage register.

4. A signal processing unit as claimed in claim 2 wherein the processing means operative to initiate a message transmission reporting the frozen count in response to a received message.

5. A signal processing unit as claimed in claim 3 wherein the counting of the storage register is disabled by gating means through which the storage register is fed.

6. A signal processing unit as claimed in claim 3 wherein the counting means includes a plurality of first counters each having a respective storage register arranged to count in parallel therewith.

7. A signal processing unit as claimed in claim 1 wherein the counting means includes means for setting at least one counting limit, means being provided for indicating when the count of the counting means falls outside the set limit.

8. A signal processing unit as claimed in claim 7 wherein comparator means is provided for comparing the count of the counting means with a preset limit and for providing the said indication.

9.   A signal processing unit as claimed in claim 7 wherein the counting means is controllable to change a limit in response to a received message.

10.   A signal processing unit as claimed in claim 1 wherein the signal processing unit includes status sensing means for sensing the status of one or more status inputs the predetermined events being changes of state sensed by the status sensing means.

11.   A signal processing unit as claimed in claim 1 and including one or more control outputs for providing remote control functions.

12.   A signal processing unit as claimed in claim 1 wherein the transeiving means is a radio transeiver.

13.   A signal processing unit as claimed in claim 1 wherein the processing means is a suitably programmed microprocessor.

14.   A signal processing unit as claimed in claim 13 wherein the counting means is configured within the microprocessor by the programme.

Fig. 1

| BIT NUMBER | — | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | — |
|---|---|---|---|---|---|---|---|---|---|---|---|---|---|---|---|---|---|---|---|---|---|---|---|---|---|---|---|---|---|---|---|---|---|---|---|
| FUNCTION | FRAME SYNC | 1 | LSB STATION ADDRESS | | | | | | | | SYSTEM ADDRESS | | | LSB CODE WORD GROUP | | | 0 | CODE WORD FUNCTION | | | | | | | | | | BOSE-CHAUDHURI CODE | | | | | PARITY | FRAME SYNC |

*Fig. 2*

*Fig. 4*

Fig. 3

*Fig. 5*